Europäisches Patentamt

European Patent Office

Office européen des brevets

(11) Publication number: **0 041 379**
**B1**

# EUROPEAN PATENT SPECIFICATION

(45) Date of publication of patent specification: **03.09.86**

(21) Application number: **81302383.5**

(22) Date of filing: **29.05.81**

(51) Int. Cl.⁴: **H 01 C 7/10,** C 04 B 35/46,
H 01 G 4/12

(54) Composite function element and process for producing same.

(30) Priority: **30.05.80 JP 73060/80**

(43) Date of publication of application:
**09.12.81 Bulletin 81/49**

(45) Publication of the grant of the patent:
**03.09.86 Bulletin 86/36**

(84) Designated Contracting States:
**DE FR GB IT NL**

(56) References cited:
**EP-A-0 040 881**
**FR-A-1 584 171**
**GB-A- 638 834**
**GB-A-1 092 805**
**GB-A-1 104 236**
**NL-A-7 801 443**
**US-A-3 933 668**

**CHEMICAL ABSTRACTS, vol. 88, no. 8, 20th
February 1978, page 454, col. 1, no. 57530u,
Columbus Ohio (USA);**

(73) Proprietor: **Matsushita Electric Industrial Co.,
Ltd.**
**1006, Oaza Kadoma**
**Kadoma-shi Osaka-fu, 571 (JP)**

(72) Inventor: **Itakura, Gen**
**5-2-317, Makinokitamachi**
**Hirakata-shi (JP)**
Inventor: **Matsuo, Yoshitiro**
**27-4, Ishizuhigashimachi**
**Neyagawa-shi (JP)**

(74) Representative: **Woodin, Anthony John
Fitzpatricks Kern House 61/62 Lincoln's Inn
Fields
London WC2B 6EX (GB)**

Courier Press, Leamington Spa, England.

# 0 041 379

## Description

### Technical field

This invention relates to a composite function element having a composite function with which both the roles of varistor and capacitor can be played simultaneously with one element.

### Background art

Electronic materials based on the utilization of grain boundary of semiconductor particles are hitherto known, of which one example is the voltage-nonlinear resistor element (zinc oxide varistor) composed mainly of zinc oxide. The zinc oxide varistor is an element obtainable by adding a very small quantity of $Bi_2O_3$, $CoO$, $MnO$, $Sb_2O_3$ or the like to zinc oxide and firing them. Its voltage nonlinearity is comparable to that of Zener diode, and its voltage nonlinearity index $a$ is as great as 50. Since such an element has excellent performances in high voltage absorption, it is in use for the purpose of stabilizing the voltage of electronic instrument circuits and for protecting them against abnormal voltage (surge). However, such zinc oxide varistor is low in dielectric constant $\varepsilon$ and its dielectric loss (tan $\delta$) is so great as 5—10%, so that it is poor in the function as a capacitor and it has exclusively been used for fulfilling the function as a varistor.

Apart from above, grain boundary layer type semiconductor porcelain capacitor is another typical example of the element in which the grain boundary of semiconductor particles is utilized. The grain boundary layer type semiconductor porcelain capacitor is an element obtainable by re-oxidizing the grain boundary of semiconductor porcelain such as barium titanate, strontium titanate or the like or by compensating the valencies of the porcelain, and its apparent dielectric constant is as high as 50,000—60,000. Giving a dielectric loss (tan $\delta$) of about 1%, it can serve as a small-sized capacitor having high capacity. However, since its voltage nonlinearity index is as small as about 1—2 and it cannot resist an electric current higher than 1 mA, it cannot be said to have a function as a varistor. Accordingly, it is exclusively in use as a capacitor.

Recently, electric and electronic instruments have become to require a very high degree of control. It is the current tendency that not only industrial instruments but also domestic ones require a very high accuracy as the result of the introduction of microcomputer. Since the logic circuit constructing microcomputer and the like is operated by pulse signals, it necessarily has a fault that it is easily influenced by noise. If electronic computers, banking machines, traffic control instruments and the like once fall into an erroneous work or a breakdown due to noise or surge, there can be incurred a social problem. As a countermeasure for such problem, noise filter has hitherto been employed. The term "noise" means the interferential voltage different from the aimed signal voltage which appears in operating electronic instruments, and is classified into artificially occurring noises and naturally occurring noises. Such noises have hitherto been removed by means of the so-called noise filter which is a combination of a coil and a capacitor. However, some of the artificially occurring noises and particularly those due to the circuit breaker of transmission and distribution lines, as well as some of the naturally occurring noises and particularly those due to lightning surge, have as low a fundamental frequency as about 5—20 KHz, of which removal has been impossible only with the hitherto known combination of coil and capacitor. In view of such a problem, there is often used recently a noise filter which also has a voltage nonlinearity resistor (varistor) between lines or between line and earth. Such a noise filter is effective for preventing the erroneous work in the microcomputer-controlled instruments because noises of wide range can be removed with it. However, such a noise filter has a great number of parts inside its set, so that its cost is high and it is contrary to the current tendency of miniaturization.

### Disclosure of the invention

It is an object of the present invention to obviate or mitigate the disadvantages discussed above.

According, an electrical element is provided having the two electric functions of varistor and capacitor. The element comprises a sintered product which is an agglomerate of n-type semiconductor particles having a thin film oxide layer of high resistivity provided at the grain boundary thereof and having a pair of electrodes provided at its surface, elements of this type being known, for example form NL—A—7 801 443 (equivalent to GB—A—1556638), and characterised in that said oxide layer contains at least one element selected from the group consisting of barium, strontium, calcium and lead, at least one element selected from the group consisting of titanium, tin and zirconium and at least one element selected from the group consisting of bismuth, boron, cerium, cobalt, copper, iron, lanthanum, lithium, manganese, niobium, antimony, silicon and zinc.

According to another aspect of the invention, a process for producing an electrical element having the two electric functions of varistor and capacitor comprises the steps of preparing a sintered product which is an agglomerate of n-type semiconductor particles and forming a thin film oxide layer of high resistivity at the grain boundary thereof by the method of thermal diffusion as disclosed in NL—A—7 801 443, and is characterised by attaching said oxide layer, which contains at least one element selected from the group consisting of barium, strontium, calcium and lead, at least one element selected from the group consisting of titanium, tin and zirconium and at least one element selected from the group consisting of bismuth, boron, cerium, cobalt, copper, iron, lanthanum, lithium, manganese niobium, antimony, silicon and zinc, to the surface of said sintered product in a proportion of 0.05 to 1 part by weight per hundred parts by weight

2

of the sintered product and thereafter heat treating the sintered product for 1 to 5 hours at a temperature in the range 1000°C to 1300°C.

Preferably, the element number ratio between the total elements of said at least one kind of element selected from the group consisting of barium, strontium, calcium and lead and the total elements of said at least one kind of element selected from the group consisting of titanium, tin and zirconium is in the range of 2:1 to 1:2.

Although a grain boundary layer type semiconductor capacitor is also obtainable by the thermal diffusion method, the decisive difference between it and the element of this invention consists in that a grain boundary layer type semiconductor capacitor is obtained by letting valency-compensating elements diffuse into the grain boundary of a sintered product comprising semiconductor particles of a perovskite type oxide and thereby forming an insulating layer at the grain boundary, whereas the element of this invention is obtained by thermally diffusing a substance simultaneously containing a perovskite type oxide and specified elements and thereby forming a grain boundary layer having the above-mentioned composite function.

Brief explanation of the drawings

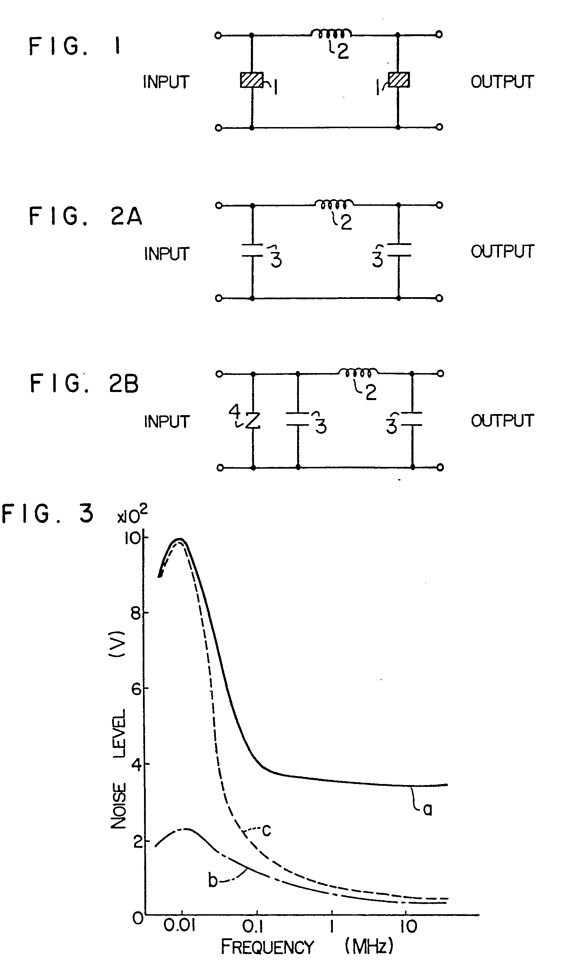

Figure 1 is a circuit diagram illustrating one example of the noise filter circuit in which the element of this invention is used; Figure 2, A and B, are circuit diagrams illustrating examples of hitherto known circuit corresponding to Figure 1; and Figure 3 is a graph illustrating the states of input noises and output noises respectively corresponding to the circuits shown in Figure 1, Figure 2A and Figure 2B.

Best mode for carrying out the invention

A sintered product having a specific resistance of 0.2—0.5 Ω · cm and an average particle diameter of 10—20 µm was prepared by adding niobium pentoxide in an amount ranging from 0.1% to 0.5% by mole to a commercial powder of strontium titanate having a purity of 97.5% or more, homogenizing them, forming the mixture and then firing it in a reductive atmosphere at a temperature ranging from 1,350°C to 1,420°C. This sintered product had a diameter of 12.5 mm with a thickness of 0.5 mm.

The following Table 1 shows the details of the composition which was attached to said sintered product and let diffuse thereinto. The diffusing components shown in Table 1 were attached to the surface of said sintered product in an amount of 5/10,000—1/100 part by weight per 1 part by weight of said sintered product and let thermally diffuse for 1—5 hours at a temperature of 1,000—1,300°C, after which baked silver electrodes were provided on both the surfaces of said sintered product. The following Table 2 illustrates the results obtained by measuring the electrical characteristics of said element.

3

TABLE 1

| Composition No. | Components of diffusing composition The numerical figures express molar ratios. | | | | | | | | | | | | | | |
|---|---|---|---|---|---|---|---|---|---|---|---|---|---|---|---|
| | $SrTiO_3$ | $Bi_2O_3$ | $B_2O_3$ | $CeO_2$ | $CoO$ | $CuO$ | $Fe_2O_3$ | $La_2O_3$ | $MnO_2$ | $Nb_2O_5$ | $Sb_2O_3$ | $SiO_2$ | $ZnO$ | $TiO_2$ | $Li_2CO_3$ |
| 1 | 5 | 90 | — | — | — | — | — | — | — | — | — | — | — | — | — |
| 2 | 5 | 90 | 5 | — | — | — | — | — | — | — | — | — | — | — | — |
| 3 | 5 | 90 | — | 5 | — | — | — | — | — | — | — | — | — | — | — |
| 4 | 5 | 90 | — | — | 5 | — | — | — | — | — | — | — | — | — | — |
| 5 | 5 | 90 | — | — | — | 5 | — | — | — | — | — | — | — | — | — |
| 6 | 5 | 90 | — | — | — | — | 5 | — | — | — | — | — | — | — | — |
| 7 | 5 | 90 | — | — | — | — | — | 5 | — | — | — | — | — | — | — |
| 8 | 5 | 90 | — | — | — | — | — | — | 5 | — | — | — | — | — | — |
| 9 | 5 | 90 | — | — | — | — | — | — | — | 5 | — | — | — | — | — |
| 10 | 5 | 90 | — | — | — | — | — | — | — | — | 5 | — | — | — | — |
| 11 | 5 | 90 | — | — | — | — | — | — | — | — | — | 5 | — | — | — |
| 12 | 5 | 90 | — | — | — | — | — | — | — | — | — | — | 5 | — | — |

TABLE 1 (Cont'd)

| Composition No. | Components of diffusing composition<br>The numerical figures express molar ratios. | | | | | | | | | | | | | | |
|---|---|---|---|---|---|---|---|---|---|---|---|---|---|---|---|
| | $SrTiO_3$ | $Bi_2O_3$ | $B_2O_3$ | $CeO_2$ | $CoO$ | $CuO$ | $Fe_2O_3$ | $La_2O_3$ | $MnO_2$ | $Nb_2O_5$ | $Sb_2O_3$ | $SiO_2$ | $ZnO$ | $TiO_2$ | $Li_2CO_3$ |
| 13 | 5 | 90 | — | — | — | — | — | — | — | — | — | — | — | 5 | — |
| 14 | 5 | 85 | 5 | — | — | 5 | — | — | — | — | — | — | — | — | — |
| 15 | 5 | 85 | — | 5 | — | 5 | — | — | — | — | — | — | — | — | — |
| 16 | 5 | 85 | — | — | 5 | 5 | — | — | — | — | — | — | — | — | — |
| 17 | 5 | 85 | — | — | — | 5 | 5 | — | — | — | — | — | — | — | — |
| 18 | 5 | 85 | — | — | — | 5 | — | 5 | — | — | — | — | — | — | — |
| 19 | 5 | 85 | — | — | — | 5 | — | — | 5 | — | — | — | — | — | — |
| 20 | 5 | 85 | — | — | — | 5 | — | — | — | 5 | — | — | — | — | — |
| 21 | 5 | 85 | — | — | — | 5 | — | — | — | — | 5 | — | — | — | — |
| 22 | 5 | 85 | — | — | — | 5 | — | — | — | — | — | 5 | — | — | — |
| 23 | 5 | 85 | — | — | — | 5 | — | — | — | — | — | — | 5 | — | — |
| 24 | 5 | 85 | — | — | — | 5 | — | — | — | — | — | — | — | 5 | — |
| 25 | 5 | 80 | — | — | — | 5 | — | — | 5 | — | — | — | — | 5 | — |
| 26 | 5 | 80 | — | — | — | 5 | — | — | 5 | — | — | — | — | — | 5 |

0 041 379

TABLE 1 (Cont'd)

| Composition No. | Components of diffusing composition. The numerical figures express molar ratios. | | | | | | | | | | | | | | |
|---|---|---|---|---|---|---|---|---|---|---|---|---|---|---|---|
| | SrTiO$_3$ | Bi$_2$O$_3$ | B$_2$O$_3$ | CeO$_2$ | CoO | CuO | Fe$_2$O$_3$ | La$_2$O$_3$ | MnO$_2$ | Nb$_2$O$_5$ | Sb$_2$O$_3$ | SiO$_2$ | ZnO | TiO$_2$ | Li$_2$CO$_3$ |
| 27 | 5 | 80 | 5 | — | — | 5 | — | — | 5 | — | — | — | — | — | — |
| 28 | 5 | 80 | — | — | 5 | 5 | — | — | 5 | — | — | — | — | — | — |
| 29 | 5 | 80 | — | — | 5 | — | — | — | 5 | — | — | — | 5 | — | — |
| 30 | 5 | 75 | — | — | 5 | — | — | — | 5 | — | 5 | — | 5 | — | — |
| 31 | 5 | 70 | — | — | 5 | 5 | — | — | 5 | — | 5 | — | 5 | — | — |
| 32 | 5 | 75 | 5 | — | | 5 | — | — | 5 | — | — | — | — | — | 5 |
| 33 | 5 | 75 | 2.5 | — | | 5 | — | — | 2.5 | — | 2.5 | — | 2.5 | — | 5 |
| 34 | 5 | 70 | 5 | — | | 5 | — | 5 | 5 | — | — | — | — | 5 | — |
| 35 | 5 | 70 | 2.5 | 0.5 | 2.5 | 5 | 0.5 | 2.5 | 2.5 | 0.5 | 0.5 | 0.5 | 0.5 | 2.5 | 0.5 |
| 36* | 0 | 80 | 5 | — | | 5 | — | — | 5 | — | — | — | — | — | — |
| 37* | 0 | 80 | — | — | 5 | 5 | — | — | 5 | — | — | — | — | — | — |
| 38* | 0 | 80 | — | — | 5 | — | — | — | 5 | — | — | — | 5 | — | — |
| 39* | 0 | 75 | — | — | 5 | — | — | — | 5 | — | 5 | — | 5 | — | — |
| 40* | 0 | 70 | — | — | 5 | 5 | — | — | 5 | — | 5 | — | 5 | — | — |
| 41* | 0 | 75 | 2.5 | — | | 5 | — | — | 2.5 | — | 2.5 | — | 2.5 | — | 5 |

* Comparative Examples

0 041 379

# 0 041 379

TABLE 2

| Data No. | Diffusing component Sample No. | Electrical characteristics | | | |
|---|---|---|---|---|---|
| | | V/mm (volt) | a | ε | tan δ (%) |
| 1 | 1 | 56 | 4 | 59600 | 1.3 |
| 2 | 2 | 72 | 4 | 48700 | 0.7 |
| 3 | 3 | 56 | 4 | 55200 | 1.2 |
| 4 | 4 | 83 | 5 | 47300 | 1.6 |
| 5 | 5 | 207 | 6 | 44500 | 0.5 |
| 6 | 6 | 103 | 4 | 52800 | 1.7 |
| 7 | 7 | 35 | 4 | 53900 | 1.3 |
| 8 | 8 | 183 | 6 | 49900 | 1.8 |
| 9 | 9 | 52 | 4 | 41300 | 2.1 |
| 10 | 10 | 48 | 4 | 55700 | 1.5 |
| 11 | 11 | 67 | 3 | 49500 | 0.8 |
| 12 | 12 | 61 | 4 | 52700 | 1.7 |
| 13 | 13 | 39 | 4 | 60200 | 1.1 |
| 14 | 14 | 230 | 6 | 41800 | 0.4 |
| 15 | 15 | 172 | 6 | 45600 | 0.7 |
| 16 | 16 | 167 | 6 | 43900 | 0.7 |
| 17 | 17 | 143 | 5 | 47100 | 0.9 |
| 18 | 18 | 98 | 4 | 50300 | 0.5 |
| 19 | 19 | 255 | 10 | 41500 | 0.6 |
| 20 | 20 | 189 | 5 | 43700 | 0.5 |
| 21 | 21 | 148 | 5 | 46300 | 0.4 |
| 22 | 22 | 156 | 8 | 40200 | 0.4 |
| 23 | 23 | 172 | 7 | 50300 | 0.6 |
| 24 | 24 | 144 | 7 | 42100 | 0.6 |
| 25 | 25 | 215 | 8 | 43300 | 0.4 |
| 26 | 26 | 243 | 8 | 48100 | 0.4 |
| 27 | 27 | 250 | 11 | 45200 | 0.3 |
| 28 | 28 | 222 | 15 | 43700 | 0.4 |

7

TABLE 2 (Cont'd)

| 29 | 29 | 136 | 13 | 49800 | 0.4 |
|---|---|---|---|---|---|
| 30 | 30 | 164 | 22 | 48600 | 0.5 |
| 31 | 31 | 238 | 14 | 41100 | 0.6 |
| 32 | 32 | 201 | 8 | 45000 | 0.9 |
| 33 | 33 | 219 | 16 | 44300 | 0.4 |
| 34 | 34 | 188 | 7 | 41900 | 0.3 |
| 35 | 35 | 157 | 14 | 39800 | 0.8 |
| 36* | 36* | 288 | 2 | 41700 | 0.3 |
| 37* | 37* | 263 | 2 | 39300 | 0.3 |
| 38* | 38* | 215 | 2 | 44200 | 0.5 |
| 39* | 39* | 248 | 3 | 42900 | 0.7 |
| 40* | 40* | 303 | 2 | 37800 | 0.5 |
| 41* | 41* | 280 | 2 | 40600 | 0.4 |

* Comparative Examples

In Table 2, V/mm is varistor voltage per unit thickness at 1 mA, $\alpha$ is voltage nonlinearity index between 0.1 mA and 1 mA, $\epsilon$ is apparent dielectric constant and tan $\delta$ is dielectric loss angle. It is apparent from Table 2 that voltage nonlinearity index $\alpha$ is great when a diffusing composition containing perovskite type oxide is let diffuse whereas $\alpha$ is as small as about 2 when a diffusing composition containing no perovskite type oxide is let diffuse. Further, the values of dielectric constant $\epsilon$ and tan $\delta$ are very good as a capacitor. Particularly, the element of Data No. 30 can be said to be an element having a sufficient composite function in that $\alpha$ is greater, than 20 which is a very good value as a varistor and dielectric constant is as great as about 50,000. Table 3 illustrates the state of characteristics obtained by replacing the $SrTiO_3$ component of the composition of No. 30 with other perovskite type oxides. The effect achieved is nearly comparable to that in the case of $SrTiO_3$ even if the latter is replaced with other perovskite type oxides used there.

TABLE 3

| Data | Replacing component | Electric characteristics | | | |
|---|---|---|---|---|---|
| | | V/mm (volt) | $\alpha$ | $\epsilon$ | tan $\delta$ (%) |
| 42 | $BaTiO_3$ | 147 | 16 | 51700 | 0.6 |
| 43 | $Ca_{0.3}Sr_{0.7}TiO_3$ | 173 | 14 | 48200 | 0.7 |
| 44 | $Sr_{0.9}Ba_{0.1}TiO_3$ | 153 | 20 | 50500 | 0.5 |
| 45 | $Sr_{0.9}Pb_{0.1}TiO_3$ | 180 | 18 | 46900 | 0.4 |
| 46 | $SrSn_{0.1}Ti_{0.9}O_3$ | 151 | 11 | 47200 | 0.5 |
| 47 | $SrTi_{0.9}Zr_{0.1}O_3$ | 133 | 19 | 49300 | 0.8 |

Next, a circuit shown in Figure 1 was made by using the element of Data No. 30, and the state of output was investigated against the noise input as shown in Figure 3. As the result, noise could be suppressed as expressed by the output curve b of Figure 3. In the case of hitherto known filter circuit shown in Figure 2A, the state of output is as expressed by the output curve c of Figure 3 and the noise is not removed sufficiently. In the hitherto known filter circuit of Figure 2B involving a varistor, the piece number of parts is greater than in the circuit of Figure 1 involving the element of this invention because the former involves varistor, though the effect obtained is equal. In Figure 1, Figure 2A and Figure 2B, 1 is the element of this invention, 2 is coil, 3 is capacitor and 4 is varistor.

Although a limited number of perovskite type oxides have been used as diffusing component in the above-mentioned examples, an equal effect can be expected with other perovskite type oxides. Further, the sintered product which is an agglomerate of semi-conductor particles is not limited to that mentioned in the examples, but any sintered products of other n type semiconductor particles can be expected to give the same effect as above.

Industrial applicability

As has been explained above, the epoch-making element of this invention herein proposed has a composite function of high voltage absorption and capacitor action and the functions of two elements, a varistor and a capacitor, can be fulfilled simultaneously with only one element. For example, it simplifies the hitherto known noise filter circuits and contributes to miniaturization, elevation of performances and reduction of cost. Accordingly, it has a great usefulness such as the possibility of application to the usage of, for example, prevention of erroneous work in microcomputer-controlled instruments, so that a great industrial effect can be expected of it.

**Claims**

1. An electrical element having the functions of varistor and capacitor comprising a pair of electrodes provided at the surface thereof in which a thin film oxide layer of high resistivity is provided at the grain boundaries of a sintered product, said sintered product being an agglomerate of n-type semiconductor particles, and characterised in that said thin film oxide layer contains at least one element selected from the group consisting of barium, strontium, calcium and lead, at least one element selected from the group consisting of titanium, tin and zirconium, and at least one element selected from the group consisting of bismuth, boron, cerium, cobalt, copper, iron, lanthanum, lithium, manganese, niobium, antimony, silicon and zinc.

2. A process for producing an electric element having the two electric functions of varistor and capacitor, comprising the steps of preparing a sintered product which is an agglomerate of n-type semiconductor particles and forming a thin film oxide layer of high resistivity at the grain boundary thereof by the method of thermal diffusion, characterised by attaching said oxide layer, which contains at least one element selected from the group consisting of barium, strontium, calcium and lead, at least one element selected from the group consisting of titanium, tin and zirconium and at least one element selected from the group consisting of bismuth, boron, cerium, cobalt, copper, iron, lanthanum, lithium, manganese, niobium, antimony, silicon and zinc, to the surface of said sintered product in a proportion of 0.05 to 1 part by weight per hundred parts by weight of the sintered product and thereafter heat treating the sintered product for 1 to 5 hours at a temperature in the range 1000°C to 1300°C.

3. A process according to Claim 2, wherein the element number ratio between the total elements of said at least one kind of element selected from the group consisting of barium, strontium, calcium and lead and the total elements of said at least one kind of element selected from the group consisting of titanium, tin and zirconium is in the range of 2:1 to 1:2.

**Patentansprüche**

1. Elektrisches Element, das die Funktionen eines Varistors und eines Kondensators aufweist, mit einem auf seiner Oberfläche vorgesehenen Paar von Elektroden, bei dem eine Dünnfilmoxydschicht hohen spezifischen Widerstandes an den Korngrenzflächen eines Sintererzeugnisses vorgesehen ist, das ein Agglomerat von n-leitenden Halbleiterteilchen ist, dadurch gekennzeichnet, daß die Dünnfilmoxydschicht wenigstens ein Element aus der aus Barium, Strontium, Calcium und Blei bestehenden Gruppe, wenigstens ein Element aus der aus Titan, Zinn und Zirkon bestehenden Gruppe und wenigstens ein Element aus der aus Wismut, Bor, Cer, Cobalt, Kupfer, Eisen, Lanthan, Lithium, Mangan, Niob, Antimon, Silizium und Zink bestehenden Gruppe enthält.

2. Verfahren zur Herstellung eines elektrischen Elements, das die beiden elektrischen Funktionen eines Varistors und eines Kondensators aufweist, mit den Verfahrensschritten der Zubereitung eines Sintererzeugnisses, das ein Agglomerat von n-leitenden Halbleiterteilchen ist und der Bildung einer Dünnfilmoxydschicht hohen spezifischen Widerstandes an dessen Korngrenzflächen durch das Verfahren thermischer Difusion, gekennzeichnet durch Anbringung der Oxydschicht, die mindestens ein Element aus der aus Barium, Strontium, Calzium und Blei bestehenden Gruppe, mindestens ein Element aus der aus Titan, Zinn und Zircon bestehenden Gruppe und mindestens ein Element aus der aus Wismut, Bor, Cer, Kobalt, Kupfer, Eisen, Lanthan, Lithium, Mangan, Niob, Antimon, Silizium und Zink bestehenden Gruppe enthält, an der Oberfläche des Sintererzeugnisses in einem Verhältnis von 0,05 bis 1 Gewichtsteilen auf 100

# 0 041 379

Gewichtsteile des Sintererzeugnisses und durch anschließende Wärmebehandlung des Sintererzeugnisses für 1 bis 5 Stunden bei einer Temperatur im Bereich von 1000°C bis 1300°C.

3. Verfahren nach Anspruch 2, bei dem das Elementzahlverhältnis zwischen den gesamten Elementen der wenigstens einen Sorte von Elementen aus der aus Barium, Strontium, Calcium und Blei bestehenden Gruppe und den gesamten Elementen der wenigstens einen Sorte von Elementen aus der aus Titan, Zinn und Zircon bestehenden Gruppe in dem Bereich von 2:1 bis 1:2 liegt.

## Revendications

1. Elément électrique présentant les fonctions de varistor et de condensateur, comprenant une paire d'électrodes disposées à sa surface dans laquelle une couche d'oxyde en pellicule mince de haute résistivité est disposée aux limites de grains d'un produit fritté, ce produit fritté étant un aggloméré de particules de semiconducteur de type n, et caractérisé en ce que la couche d'oxyde en pellicule mince contient au moins un élément choisi dans le groupe constitué par le baryum, le strontium, le calcium et le plomb, au moins un élément choisi dans le groupe constitué par le titane, l'étain et le zirconium et au moins un élément choisi dans le groupe constitué par le bismuth, le bore, le cérium, le cobalt, le cuivre, le fer, le lanthane, le lithium, le manganèse, le niobium, l'antimoine, le silicium et le zinc.

2. Procédé pour la fabrication d'un élément électrique présentant les deux fonctions électriques de varistor et de condensateur, comprenant les opérations successives consistant à préparer un produit fritté qui est un aggloméré de particules de semiconducteur de type n et à former une couche d'oxyde en pellicule mince de haute résistivité à la limite de grains de ce produit par la méthode de diffusion thermique, caractérisé en ce qu'on fixe la couche d'oxyde, qui contient au moins un élément choisi dans le groupe constitué par le baryum, le strontium, le calcium et le plomb, au moins un élément choisi dans le groupe constitué par le titane, l'étain et le zirconium et au moins un élément choisi dans le groupe constitué par le bismuth, le bore, le cérium, le cobalt, le cuivre, le fer, le lanthane, le lithium, le manganèse, le niobium, l'antimoine, le silicium et le zinc, à la surface du produit fritté dans une proportion de 0,05 à 1 partie en poids pour 100 parties en poids du produit fritté, après quoi on soumet le produit fritté à un traitement thermique pendant 1 à 5 h à une température se situant dans la gamme de 1000°C à 1300°C.

3. Procédé selon la revendication 2, dans lequel le rapport de nombres d'éléments entre les éléments totaux choisis dans le groupe constitué par le baryum, le strontium, le calcium et le plomb et les éléments totaux choisis dans le groupe constitué par le titane, l'étain et le zirconium se situe dans la gamme de 2:1 à 1:2.

FIG. 1

FIG. 2A

FIG. 2B

FIG. 3